# EUROPÄISCHE PATENTSCHRIFT

(11) **EP 1 380 792 B1**
(45) Veröffentlichungstag und Bekanntmachung des Hinweises auf die Patenterteilung: **21.06.2006**
(21) Anmeldenummer: 03014989.2
(22) Anmeldetag: 02.07.2003
(51) Int. Cl.: F16L 57/06, F16L 11/115, B25J 19/00

(54) **Vorrichtung zum Schutz eines Rippenschlauches**
Device for protecting a corrugated hose
Dispositif de protection d'un tuyau ondulé

(30) Priorität: 11.07.2002 DE 20211396 U
(43) Veröffentlichungstag der Anmeldung: 14.01.2004
(73) Patentinhaber: KUKA Roboter GmbH, 86165 Augsburg (DE)
(72) Erfinder: Karlinger, Stefan, 86199 Augsburg (DE)
(74) Vertreter: Lempert, Jost

(56) Entgegenhaltungen:
- CH-A- 255 186
- DE-U- 20 100 947
- DE-U- 29 814 418
- JP-A- 54 098 450
- US-A- 3 464 722
- US-A- 3 797 836
- US-A- 5 690 146

## Beschreibung

Die Erfindung betrifft einen Rippenschlauch nach dem Oberbegriff des Anspruchs 1.

Derartige Rippenschläuche werden als Schutzschläuche für Energiezuführungsleitungen bei Werkzeugen, Maschinen und insbesondere Robotern eingesetzt. Die Schutzschläuche sind als Rippenschläuche ausgebildet, um eine hohe Flexibilität zu ermöglichen, die insbesondere bei einem Roboter im Handbereich bzw. unmittelbar vor der Hand des Roboters erforderlich ist, da die Hand komplexe Bewegungen um drei Achsen (Roboterachsen A4 bis A6) ausführen kann. Es besteht dabei die Gefahr, dass ein solcher Schutzschlauch an Teilen des Roboters reibt. Zum Schutz des Schlauches ist dieser mit Protektoren in Form von Verschleißringen versehen, die sich in Längsrichtung über mehrere Rippen hin erstrecken. Sie weisen hierzu mehrere Innenrippen- und Nuten auf, mit denen sie auf mehrere Rippen des Rippenschlauches aufsitzen.

Aus der DE 298 14 418 U1 und der DE 201 00 947 U1 sind Rippenschläuche mit ringförmigen Schutzvorrichtungen gemäß dem Oberbegriff des Anspruchs 1 bekannt, die mehrere Nuten und Rippen eines Rippenschlauchs überdecken und mindestens vier in Nuten des Rippenschlauchs eingreifende Stege sowie entsprechende Nuten am Ringteil selbst aufweisen. Hierdurch wird die Beweglichkeit des Rippenschlauchs im Bereich dieser Schutzvorrichtungen erheblich beeinträchtigt, was insbesondere deswegen nachteilig ist, weil der Schlauch üblicherweise an mehreren Stellen gegen Verschleiß durch Reiben oder dergleichen an Teilen eines Roboters geschützt werden muss.

Es ist weiterhin grundsätzlich bekannt Rohrenden mit sich radial erstreckenden Flanschen durch die Flansche übergreifende Schellen axial zusammenzuhalten, wobei die Materialstärke der Schellen minimal ist und lediglich durch die die Rohrenden ausgeübten und demgemäß durch die Schellen aufzunehmenden Kräfte bedingt ist.

Durch derartige Protektoren wird die Beweglichkeit des Rippenschlauches, dort wo ein solcher Protektor aufsitzt, stark begrenzt. Dies führt dazu, dass in Bereichen, in denen kein Protektor gegeben ist, eine noch stärkere Biegung und damit Belastung des Rippenschlauches gegeben ist. Auch wird durch die Höhe der Protektoren, die 20 bis 30 mm betragen kann, zusätzlich eine Biegung des Rippenschlauches durch den hierdurch bedingten Abstand zum Roboterteil verursacht. Derartige Protektoren werden daher in kritischen Bereichen oft weggelassen, wodurch die Gefahr eines erhöhten Verschleißes des Rippenschlauches in diesen Bereichen gegeben ist.

Der Erfindung liegt daher die Aufgabe zugrunde, eine Vorrichtung zum Schutz eines Rippenschlauches zu schaffen, die unter Vermeidung der vorgenannten Nachteile trotz eines guten Schutzes des Rippenschlauches gegen Verschleiß eine weiterhin hohe Beweglichkeit desselben auch im geschützten Bereich ermöglicht. Der Erfindung liegt auch die Aufgabe zugrunde, einen geschützten Rippenschlauch zu schaffen, der also selbst geringem Verschleiß ausgesetzt ist, dennoch aber eine hohe Beweglichkeit behält.

Erfindungsgemäß wird die genannte Aufgabe bei einem gattungsgemäßen Rippenschlauch durch die kennzeichnenden Merkmale des Anspruchs 1 gelöst.

Die Erfindung beinhaltet, die Schutzvorrichtung derart auszugestalten, dass sie auf einer einzigen Rippe eines Rippenschlauches aufsitzt. Hierdurch wird die Biegefähigkeit des Rippenschlauches in keiner Weise beeinträchtigt, dennoch ein Schutz desselben gegen Verschleiß gewährleistet. Durch diese Ausgestaltung kann auch erreicht werden, dass die Höhe der Schutzvorrichtung wesentlich reduziert und in den Millimeterbereich gebracht wird. Hierdurch werden statisch bedingte Biegungen, wie sie beim Stande der Technik in erheblichem Maße vorhanden sind, reduziert bzw. ausgeschlossen. Um dennoch über eine hinreichende Länge, einen hinreichenden Axialbereich des Rippenschlauches einen guten Verschleiß unter Beibehaltung der Biegefähigkeit zu ermöglichen sieht die Erfindung in bevorzugter Ausgestaltung vor, dass in einem Teilbereich des Rippenschlauches jede dritte Rippe (oder weniger) mit der Vorrichtung versehen ist, wobei insbesondere in einem Teilbereich des Rippenschlauches mindestens drei Vorrichtungen in Axialrichtung hintereinander angeordnet sind. Ersteres heißt, dass auf jeder dritten, jeder zweiten oder sogar jeder benachbarten Rippe in einem gewissen Bereich eine entsprechende erfindungsgemäße Schutzvorrichtung aufsetzt, d.h. zwischen zwei auf Rippen aufsitzenden Schutzvorrichtungen nicht mehr als zwei ungeschützte Rippen oder eben nur eine ungeschützte Rippe (oder keine) vorhanden sind bzw. ist.

Unter Gewährleistung der vorstehend genanten Merkmale der erfindungsgemäßen Schutzvorrichtung sind verschiedenartige Ausbildungen derselben denkbar. In einer äußerst bevorzugten Vorrichtung ist vorgesehen, dass die Ringnut trapezförmigen Querschnitt hat, wobei insbesondere die Ringnut durch zwei in Axialrichtung mit Abstand zueinander angeordnete parallel zueinander verlaufende Ringstege begrenzt ist. Auch die Außenseite der Schutzvorrichtungen bzw. des Ringteils oder der Teilringe kann in verschiedener Weise ausgebildet sein. Es ist ein rechteckförmiger oder ebenfalls trapezförmig Querschnitt möglicht. In einer bevorzugten Ausgestaltung ist aber vorgesehen, dass die Teilringe auf ihrer Außenseite einen halbkreisförmigen Querschnitt aufweisen. Eine äußerst bevorzugte Ausgestaltung sieht vor, dass die Teilringe jeweils identisch ausgebildet sind. Hierdurch ist es möglich, auch zwei oder mehr Teilringen lediglich mit einem Werkzeug zu fertigen.

Die Verbindung der Teilringe an ihren Stirnseiten, so dass ein sicherer Sitz auf dem Rippenschlauch gewährleistet ist, kann ebenfalls in unterschiedlicher Weise erfolgen. So kann in bevorzugter Weise vorgesehen sein, dass die Teilringe kraftschlüssig miteinander verbunden sind oder aber dass die Teilringe durch Formschluss miteinander verbunden sind. Im ersten genannten Falle sieht eine bevorzugte Ausgestaltung vor, dass die Teilringe an den Stirnseiten miteinander verklebt sind. Aber auch ein Verschweißen der Endbereiche der Teilringe ist möglich. Bei einer formschlüssigen Verbindung kann insbesondere vorgesehen sein, dass die Teilringe an ihren Stirnseiten komplementäre Hinterschneidungen aufweisen, wobei die komplementären Hinterschneidungen vorzugsweise derart ausgebildet sind, dass die Hinterschneidungen durch eine Quernut übergreifendes Hakenteil bzw. gebildet sind. In der Regel können die Hakenteile dabei so gestaltet sein, dass zumindest ein Haken an einer Stirnseite eines Teilrings radial von außen nach innen und komplementärer Haken radial von innen nach außen gerichtet ist. Diese Ausbildung gilt auch für den Fall, dass die Teilringe nicht identisch ausgebildet sind. Bei zwei Teilringen, also Halbringen kann vorgesehen sein, dass an einem Teilring die beiden Stirnseiten von außen nach innen ragende Haken, am anderen Teilring von innen nach außen ragende Haken vorgesehen sind; in diesem Falle ist aber für jeden Teilring ein eigenes Werkzeug erforderlich. Bei der Ausgestaltung, bei der jeder Teilring an einem Ende ein von außen nach innen ragenden Haken und am anderen Ende einen von innen nach außen ragenden komplementären Haken aufweist, ist lediglich Werkzeug erforderlich, da solche Teilringe identisch ausgebildet sein können.

Um den Verschleißzustand einer Vorrichtung eines erfindungsgemäßen Schlauchs selbst feststellen zu können, so dass diese vor endgültiger Zerstörung ausgetauscht werden kann, sieht die Erfindung in Weiterbildung vor, dass Teilringe in Radialrichtung zumindest zweischichtig mit Schichten unterschiedlichen Reflektionsvermögens ausgebildet sind, wobei insbesondere die Schichten der Teilringe unterschiedliches Reflektionsvermögen in verschiedenen Wellenbereichen aufweisen.

Insgesamt wird daher durch die Erfindung ein Rippenschlauch mit einer Vorrichtung zum Schutz desselben gegen Verschleiß geschaffen, die unter Ermöglichung der notwendigen Beweglichkeit des Rippenschlauches auch einen guten Schutz desselben gegen Verschleiß gewährleistet.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnungen im einzelnen erläutert ist. Dabei zeigt:
- Fig. 1: eine bevorzugte, erfindungsgemäße Ausführungsform einer Vorrichtung zum Schutz eines Rippenschlauches vor Zusammensetzen der Teilringe;
- Fig. 2: eine vergrößerte Darstellung des Verbindungsbereichs der beiden Teilringe der Fig. 1;
- Fig. 3: die Vorrichtung der Fig. 1 im zusammengesetzten Zustand;
- Fig. 4: einen erfindungsgemäßen Rippenschlauch mit Vorrichtungen zum Schutz desselben in perspektivischer Darstellung;
- Fig. 5: einen Abschnitt eines erfindungsgemäßen Rippenschlauches mit Vorrichtungen zum Schutz desselben in Seitenansicht, teilweise geschnitten; und
- Fig. 6: eine vergrößerte Ausschnittsdarstellung des Gegenstandes der Fig. 5.

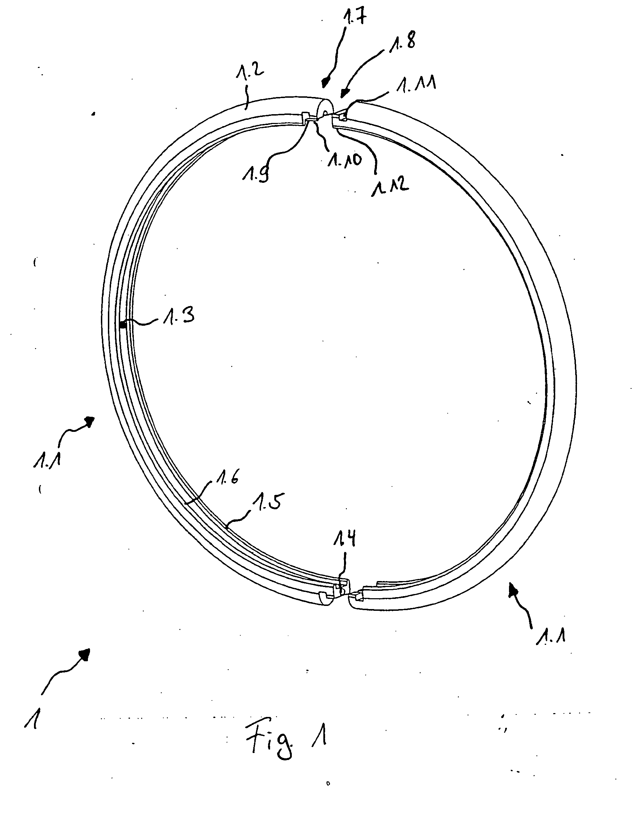

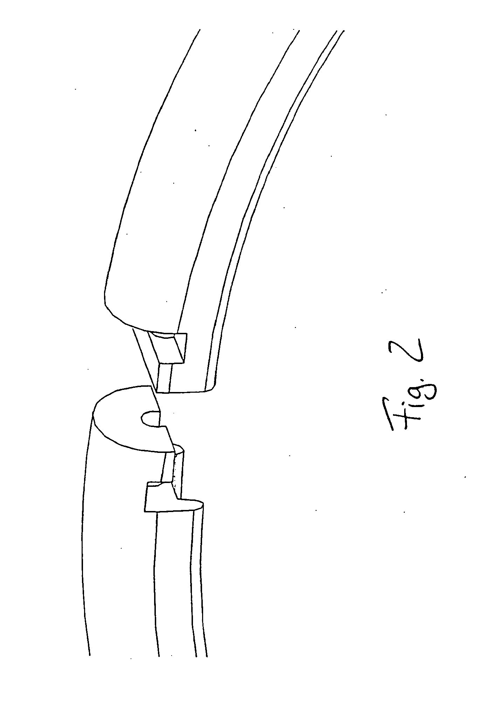

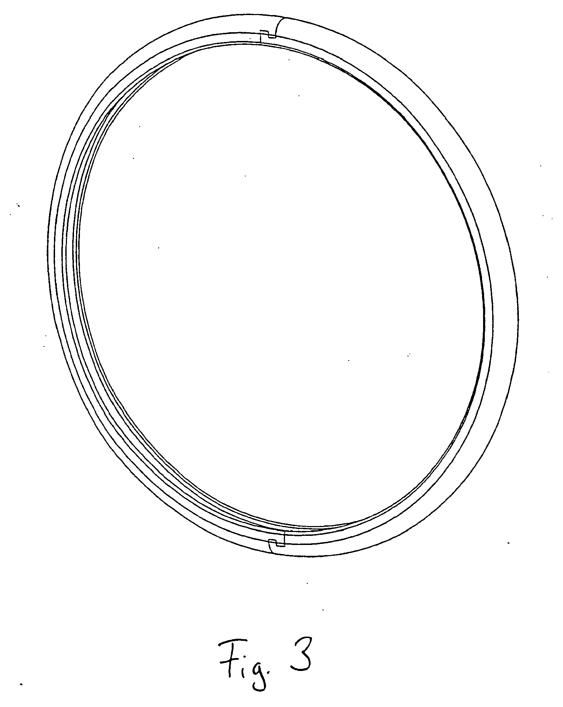

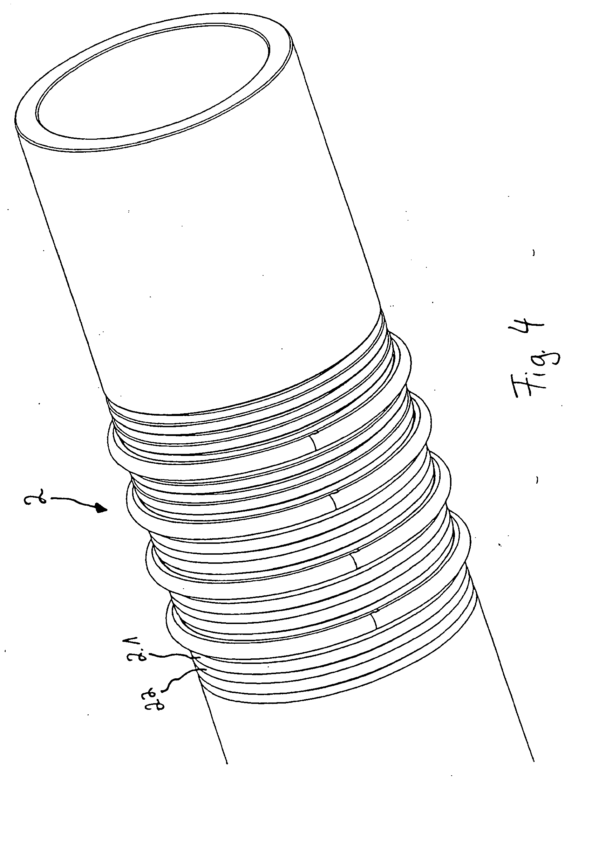

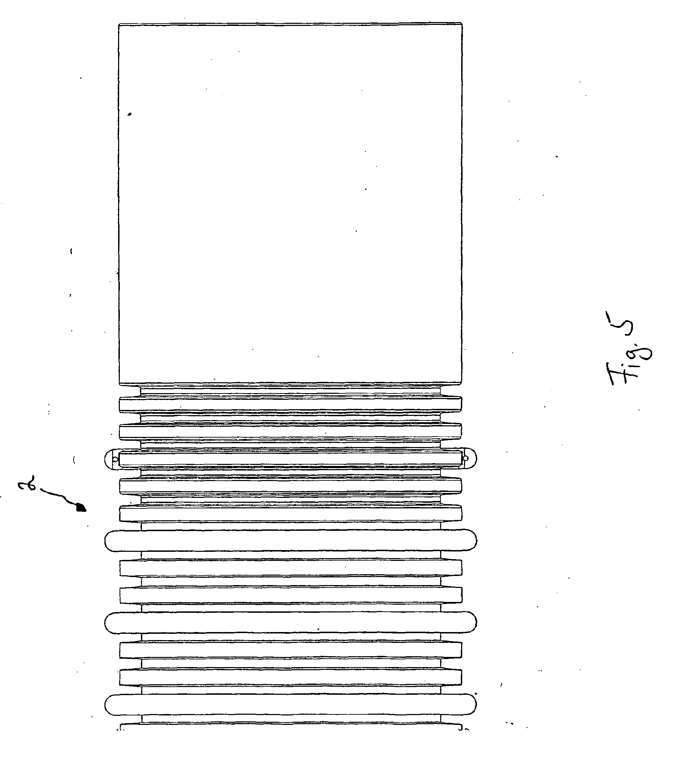

Gemäß der Fig. 1 bis 3 besteht die Vorrichtung 1 zum Schutz eines Rippenschlauches 2 (Fig. 4 bis 6) im darstellten erfindungsgemäßen Ausführungsbeispiel aus zwei Teilringen 1.1 in Form von Halbringen. Sie kann auch aus mehrere Teilringen 1.1, beispielsweise aus drei Teilringen bestehen. Die Teilringe 1.1 sind jeweils identisch ausgebildet. Die Teilringe 1.1 weisen eine im Querschnitt halbkreisförmige Außenkontur 1.2 auf, wobei auch andere Außenkonturen, insbesondere auch konvexe Außenkonturen möglich sind. Auf ihrer Innenseite weisen sie eine über ihre Längserstreckung in Umfangsrichtung verlaufende Nut 1.3 auf. Die Nut 1.3 hat einen trapezförmigen Querschnitt und erweitert sich von ihrem Bodenbereich 1.4 nach innen hin. Sie wird durch zwei seitliche Ringstege 1.5, 1.6 begrenzt. Die Teilringe können an ihren Stirnseiten gänzlich eben gebildet sein. Sie können dann durch eine kraftschlüssige Verbindung, wie durch Kleben miteinander verbunden werden, um so einen sicheren Sitz auf der Rippe eines Rippenschlauches 2 zu erhalten.

Im dargestellten Ausführungsbeispiel weisen die Teilringe 1.1 an ihren Stirnseiten komplementäre Formschlussausbildungen 1.7, 1.8 auf. Die Formschlussausbildung 1.7 hat hierzu eine nach innen offene Nut 1.9, die durch einen von der Außenseite her die Nut 1.9 über- und hintergreifenden Haken 1.10 gebildet ist. Die Formschlussausbildung 1.8 ist hierzu komplementär ausgebildet und weist demgemäß eine radial nach außen hin offene Nut 1.11 aus, die durch ein sie über- und hintergreifenden Haken 1.12 gebildet ist. Zur Verbindung der beiden Teilringe 1.1 werden die Haken oder Nasen 1.10, 1.12 in Umfangsrichtung gegen- und übereinander geschoben, bis sie jeweils in die gegenüberliegende Nut einrasten. Hiermit wird eine sichere und zuverlässige Formschluss-Verbindung der beiden Teilringe 1.1 um eine Rippe eines Rippenschlauches geschaffen.

Die Fig. 4 bis 6 zeigen Abschnitte eines erfindungsgemäßen Rippenschlauches, die mit Vorrichtungen zum Schutz desselben versehen sind. Ein mit solchen Vorrichtungen versehener Rippenschlauch ist Gegenstand der Erfindung. Der Rippenschlauch weist mehrere in Längsrichtung nebeneinander angeordnete sich über den Umfang des Rippenschlauches 2 erstreckende Rippen 2.1 auf, zwischen denen Ringnuten 2.2 ausgebildet sind. Hierdurch erhält der Rippenschlauch 2 eine hohe Flexibilität. Unter Bezugnahme auf die in Fig. 1 bis 3 im Detail beschriebene Vorrichtung zum Schutz eines solchen erfindungsgemäßen Rippenschlauches 2 sitzt jeweils, wie schon gesagt, auf einer Umfangs-Rippe 2.1 eine solche Vorrichtung, gehalten durch die Rippe seitlich - d.h. in Axialrichtung umgreifende Ringstege 1.5, 1.6 in Axialrichtung - formschlüssig auf.

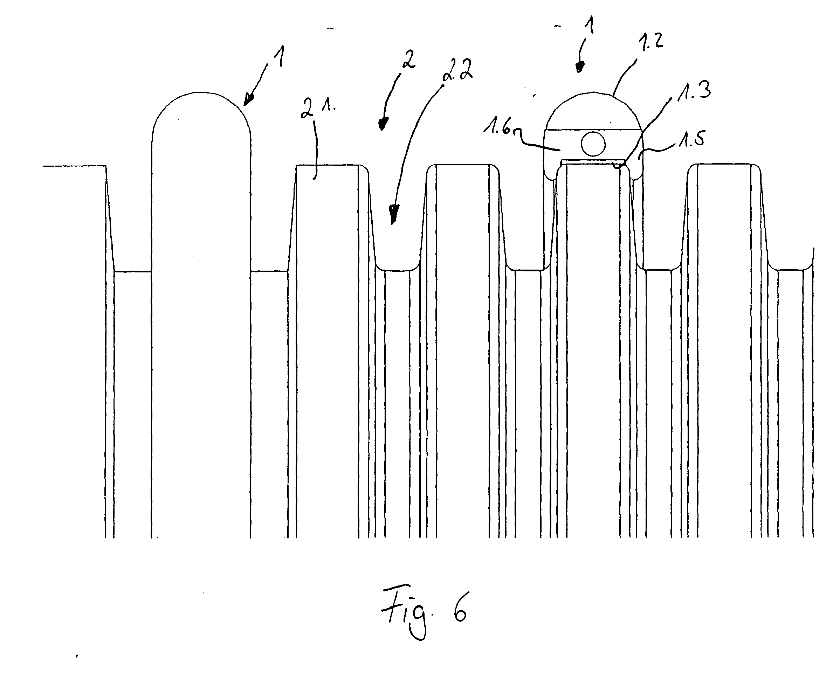

In einem zu schützenden Teilbereich des Rippenschlauches sitzt mindestens auf jeder dritten Rippe eine Vorrichtung 1 auf, d.h. also dass zwischen zwei Vorrichtungen nicht mehr als zwei ungeschützte Rippen 2.1 des Rippenschlauches 2 vorgesehen sind, wie dies in den Fig. 4 und 6 dargestellt ist. Selbstverständlich könnte in sehr kritischen Bereichen auch vorgesehen sein, dass jede zweite Rippe mit einer erfindungsgemäßen Vorrichtung versehen ist, dass also zwischen zwei Vorrichtungen lediglich eine ungeschützte Rippe vorhanden ist.

Durch die Erfindung wird so ein mittels der Vorrichtung gegen Verschleiß geschützter erfindungsgemäßer Rippenschlauch geschaffen, der trotz dieses Schutzes eine hohe Flexibilität auch im geschützten Bereich aufweist.

### Bezugszeichenliste

- 1: Vorrichtung
- 1.1: Teilringe
- 1.2: Außenkontur
- 1.3: Nut
- 1.4: Bodenbereich
- 1.5: Ringsteg
- 1.6: Ringsteg
- 1.7: Formschlussausbildung
- 1.8: Formschlussausbildung
- 1.9: Nut
- 1.10: Haken
- 1.11: Nut
- 1.12: Haken
- 2: erfindungsgemäßer Rippenschlauch
- 2.1: Rippen
- 2.2: Ringnut

## Patentansprüche

1. Rippenschlauch mit mindestens einer Vorrichtung zum Schutz gegen Verschleiß in Form mindestens eines den Schlauch umgebenden Ringteils mit mindestens zwei an ihren Stirnseiten miteinander verbindbaren einstückigen Teilringen (1.1), **dadurch gekennzeichnet, dass** das mindestens eine Ringteil auf seiner Innenseite genau eine an die Außenseite einer Rippe des Rippenschlauches angepasste Ringnut (1.3) aufweist.

2. Schlauch nach Anspruch 1, **dadurch gekennzeichnet, dass** die Ringnut (1.3) trapezförmigen Querschnitt hat.

3. Schlauch nach Anspruch 1 oder 2, **dadurch gekennzeichnet, dass** die Ringnut durch zwei in Axialrichtung mit Abstand zueinander angeordnete parallel zueinander verlaufende Ringstege (1.5, 1.6) begrenzt ist.

4. Schlauch nach einem der vorangehenden Ansprüche, **dadurch gekennzeichnet, dass** die Teilringe (1.1) auf ihrer Außenseite einen halbkreisförmigen Querschnitt aufweisen.

5. Schlauch nach einem der vorangehenden Ansprüche, **dadurch gekennzeichnet, dass** die Teilringe jeweils identisch ausgebildet sind.

6. Schlauch nach einem der vorangehenden Ansprüche, **dadurch gekennzeichnet, dass** die Teilringe kraftschlüssig miteinander verbunden sind.

7. Schlauch nach einem der vorangehenden Ansprüche, **dadurch gekennzeichnet, dass** die Teilringe (1.1) an den Stirnseiten miteinander verklebt sind.

8. Schlauch nach einem der Ansprüche 1 bis 5, **dadurch gekennzeichnet, dass** die Teilringe durch Formschluss miteinander verbunden sind.

9. Schlauch nach einem der Ansprüche 1 bis 5, 8, **dadurch gekennzeichnet, dass** die Teilringe (1.1) an ihren Stirnseiten komplementäre Hinterschneidungen aufweisen.

10. Schlauch nach Anspruch 9, **dadurch gekennzeichnet, dass** die Hinterschneidungen durch ein eine Quernut (1.9 bzw. 1.11) übergreifendes Hakenteil (1.10 bzw. 1.12) gebildet sind.

11. Schlauch nach Anspruch 10, **dadurch gekennzeichnet, dass** zumindest ein Haken (1.10) an einer Stirnseite eines Teilrings (1.1) radial von außen nach innen und ein komplementärer Haken (1.12) an einer Stiznseite des anderen Teilzings (1.2) radial von innen nach außen gerichtet ist.

12. Schlauch nach einem der vorangehenden Ansprüche, **dadurch gekennzeichnet, dass** die Teilringe in Radialrichtung zumindest zweischichtig mit Schichten unterschiedlichen Reflektionsvermögens ausgebildet sind.

13. Schlauch nach Anspruch 12, **dadurch gekennzeichnet, dass** die Schichten der Teilringe unterschiedliches Reflektionsvermögen in verschiedenen Wellenbereichen aufweisen.

14. Rippenschlauch nach einem der Ansprüche 1 bis 13, **dadurch gekennzeichnet, dass** in einem Teilbereich des Rippenschlauches jede dritte Rippe oder weniger mit der Vorrichtung versehen ist.

15. Rippenschlauch nach Anspruch 14, **dadurch gekennzeichnet, dass** in einem Teilbereich des Rippenschlauches mindestens drei Vorrichtungen in Axialrichtung hintereinander angeordnet sind.

## Claims

1. Corrugated hose with at least one device for protecting against wear in the form of at least one ring part surrounding the hose and having at least two, one-piece partial rings (1.1) interconnectable at their front faces, **characterized in that** the at least one ring part is provided on its inside with precisely one annular groove (1.3) adapted to the outside of a corrugation of the corrugated hose.

2. Hose according to claim 1, **characterized in that** the annular groove (1.3) has a trapezoidal cross-section.

3. Hose according to claim 1 or 2, **characterized in that** the annular groove is bounded by two axially spaced, mutually parallel annular lands (1.5, 1.6).

4. Hose according to one of the preceding claims, **characterized in that** on their outside the partial rings (1.1) have a semicircular cross-section.

5. Hose according to one of the preceding claims, **characterized in that** the partial rings are in each case identically constructed.

6. Hose according to one of the preceding claims, **characterized in that** the partial rings are frictionally interconnected.

7. Hose according to one of the preceding claims, **characterized in that** the front faces of the partial rings (1.1) are bonded together.

8. Hose according to one of the claims 1 to 5, **characterized in that** the partial rings are interconnected by positive engagement.

9. Hose according to one of the claims 1 to 5 and 8, **characterized in that** on their front faces the partial rings (1.1) have complimentary undercuts.

10. Hose according to claim 9, **characterized in that** the undercuts are formed by a hook part (1.10, 1.12) engaging over a transverse slot (1.9, 1.11).

11. Hose according to claim 10, **characterized in that** at least one hook (1.10) on one front face of a partial ring (1.1) is directed radially from the outside to the inside and one complimentary hook (1.12) on one front face of the other partial ring (1.2) is directed radially from the inside to the outside.

12. Hose according to one of the preceding claims, **characterized in that** in the radial direction the partial rings are constructed in at least two-layer form with layers having a different reflectivity.

13. Hose according to claim 12, **characterized in that** the layers of the partial rings have a differing reflectivity in different wave ranges.

14. Corrugated hose according to one of the claims 1 to 13, **characterized in that** in a partial area of the corrugated hose every third corrugation or less is provided with the device.

15. Corrugated hose according to claim 14, **characterized in that** in a partial area of the corrugated hose at least three devices are arranged in axially consecutive manner.

## Revendications

1. Tuyau annelé équipé d'au moins un dispositif de protection contre l'usure sous la forme d'au moins une pièce annulaire entourant le tuyau et comportant au moins deux anneaux partiels (1.1) d'une seule pièce reliables entre eux au niveau de leurs faces frontales, **caractérisé en ce que** l'au moins une pièce annulaire présente sur sa face interne une rainure annulaire (1.3) exactement adaptée à la face extérieure d'une saillie annulaire du tuyau annelé.

2. Tuyau selon la revendication 1, **caractérisé en ce que** la rainure annulaire (1.3) présente une section trapézoïdale.

3. Tuyau selon la revendication 1 ou 2, **caractérisé en ce que** la rainure annulaire est délimitée par deux nervures annulaires (1.5, 1.6) disposées à distance l'une de l'autre en direction axiale et s'étendant parallèles l'une à l'autre.

4. Tuyau selon l'une quelconque des revendications précédentes, **caractérisé en ce que** les anneaux partiels (1.1) présentent sur leur face extérieure une section semi-circulaire.

5. Tuyau selon l'une quelconque des revendications précédentes, **caractérisé en ce que** les anneaux partiels sont à chaque fois conformés de manière identique.

6. Tuyau selon l'une quelconque des revendications précédentes, **caractérisé en ce que** les anneaux partiels sont reliés entre eux à ajustement serré.

7. Tuyau selon l'une quelconque des revendications précédentes, **caractérisé en ce que** les anneaux partiels (1.1) sont reliés entre eux par collage sur leurs faces frontales.

8. Tuyau selon l'une quelconque des revendications 1 à 5, **caractérisé en ce que** les anneaux partiels sont reliés entre eux à ajustement de forme.

9. Tuyau selon l'une quelconque des revendications 1 à 5, 8, **caractérisé en ce que** les anneaux partiels (1.1) présentent sur leurs faces frontales des contre-dépouilles complémentaires.

10. Tuyau selon la revendication 9, **caractérisé en ce que** les contre-dépouilles sont constituées par une pièce en crochet (1.10 ou 1.12) s'accrochant sur une rainure transversale (1.9 ou 1.11).

11. Tuyau selon la revendication 10, **caractérisé en ce qu'**au moins un crochet (1.10) est orienté sur la face frontale d'un anneau partiel (1.1) radialement de l'extérieur vers l'intérieur et **en ce qu'**un crochet complémentaire (1.12) est orienté sur la face frontale de l'autre anneau partiel (1.2) radialement de l'intérieur vers l'extérieur.

12. Tuyau selon l'une quelconque des revendications précédentes, **caractérisé en ce que** les anneaux partiels présentent en direction radiale au moins deux couches à réflectance différente.

13. Tuyau selon la revendication 12, **caractérisé en ce que** les couches des anneaux partiels présentent une réflectance différente dans différentes gammes de fréquences.

14. Tuyau annelé selon l'une quelconque des revendications 1 à 13, **caractérisé en ce que** dans une zone du tuyau annelé, une saillie annulaire sur trois ou moins est équipée du dispositif.

15. Tuyau annelé selon la revendication 14, **caractérisé en ce que** dans une zone du tuyau annelé au moins trois dispositifs sont disposés l'un derrière l'autre en direction axiale.
